# EUROPÄISCHE PATENTSCHRIFT

(11) **EP 0 855 233 B1**
(45) Veröffentlichungstag und Bekanntmachung des Hinweises auf die Patenterteilung: **19.12.2001**
(21) Anmeldenummer: 98101155.4
(22) Anmeldetag: 23.01.1998
(51) Int. Cl.: B21B 27/02, F16F 15/36

(54) **Verfahren zur Herstellung von schwingungsgedämpften Walzen und Walzensatz**
Method for the manufacture of vibration-damped rolls and set of rolls
Procédé pour la fabrication de cylindres à amortissement de vibrations et jeu de cylindres

(30) Priorität: 23.01.1997 DE 19702325
(43) Veröffentlichungstag der Anmeldung: 29.07.1998
(73) Patentinhaber: ALCAN DEUTSCHLAND GMBH, D-37075 Göttingen (DE)
(72) Erfinder: Rawe, Franz-Josef, 57439 Attendorn (DE)
(74) Vertreter: Füchsle, Klaus, Dipl.-Ing.

(56) Entgegenhaltungen:
- EP-A- 0 779 394
- DE-A- 2 352 088
- DE-A- 2 420 563
- DE-A- 2 449 874
- GB-A- 1 036 922
- GB-A- 1 194 205
- US-A- 4 553 884
- US-A- 5 024 150
- PATENT ABSTRACTS OF JAPAN vol. 014, no. 428 (M-1025), 14.September 1990 -& JP 02 169115 A (SUMITOMO ELECTRIC IND LTD), 29.Juni 1990,

## Beschreibung

### Technisches Gebiet

Die Erfindung betrifft ein Verfahren zur Herstellung von schwingungsgedämpften Walzen sowie einen Walzensatz, bestehend aus zumindest je einer Arbeits- und Stützwalze.

Metallband oder -blech wird üblicherweise in Kaltwalzwerken unter Verwendung von jeweils paarweise angeordneten Walzen, zwischen denen das Blech oder Band hindurchgeführt wird, auf eine gewünschte Dicke gewalzt. Diesen sogenannten Arbeitswalzen, die beim Walzvorgang in unmittelbarer Berührung mit dem Walzgut stehen, ist jeweils zumindest eine Stützwalze zugeordnet. Bei einer üblichen Anordnung sind somit (in vertikaler Reihenfolge) zunächst eine Stützwalze, dann eine Arbeitswalze, darüber das Walzgut, eine zweite Arbeitswalze und die zugeordnete zweite Stützwalze übereinander angeordnet. Die verschiedenen Walzen sind über geeignete Lager in einem Walzgerüst gelagert.

Beim Betrieb von Kaltwalzanlagen mit den beschriebenen Walzenanordnungen kommt es infolge verschiedenster Einflüsse regelmäßig zu Schwingungen der beteiligten Bauteile, die zu unerwünschter Geräuschentwicklung, zur bleibenden Ausbildung von Querwellen auf dem Walzgut und zu periodischer, querstreifenförmiger Dickenveränderung des gewalzten Bleches oder Bandes führen können. Aufgrund von Resonanz sind die beschriebenen Schwingungen und deren negative Auswirkungen auf die Qualität des Walzgutes dann besonders schwerwiegend, wenn die beteiligten Walzen in einer ihrer Eigenfrequenzen schwingen.

### Stand der Technik

Zur Behebung der nachteiligen Eigenschwingungen ist es insbesondere für bereits bestehende Walzwerkanlagen bekannt, die gesamte Anlage derart umzukonstruieren, daß im Bereich der üblichen Walzgeschwindigkeiten und Walzkräfte Eigenfrequenzschwingungen vermieden werden. Hierbei sind zumeist derartig umfangreiche Änderungen erforderlich, daß diese Maßnahme nur mit einem unerwünscht hohen Aufwand durchgeführt werden kann.

Ferner ist es zur Vermeidung von Schwingungen der Walzen bekannt, an den schwingungsgefährdeten Teilen der Anlage Schwingungswächter anzubringen. Diese Schwingungswächter geben ein Signal aus, wenn sich die Anlage im Betrieb einem unerwünschten Schwingungszustand nähert. Anhand der Signale der Schwingungswächter werden die Parameter des Walzbetriebes, zumeist die Walzgeschwindigkeit, derart geregelt, daß das Auftreten von Schwingungen vermieden werden kann. Da hierbei zumeist die Walzgeschwindigkeit verringert werden muß, ist die beschriebene Maßnahme zur Abhilfe von Schwingungszuständen aus wirtschaftlichen Gründen nachteilig.

### Darstellung der Erfindung

Der Erfindung liegt somit die Aufgabe zugrunde, ein Verfahren zu schaffen, mit dem insbesondere bei bestehenden Walzanlagen das Auftreten von Schwingungen im Bereich von Eigenfrequenzen der vorhandenen Walzen und die dadurch hervorgerufenen Probleme vermieden werden können. Das Verfahren soll mit geringem Aufwand durchzuführen sein. Ferner soll ein Walzensatz bestehend aus zumindest je einer Arbeits- und Stützwalze entwickelt werden, bei dem die unerwünschten Eigenschwingungen der Walzen ausgeschlossen werden können.

Die Lösung dieser Aufgaben erfolgt durch ein Verfahren gemäß dem Anspruch 1 und einen Walzensatz gemäß dem Anspruch 12.

Bei dem erfindungsgemäßen Verfahren wird in zumindest einer Stützwalze und/oder einer zugeordneten Arbeitswalze zumindest ein achsparalleler Hohlraum ausgebildet. Durch diese Maßnahme können die Werte der Eigenschwingungsfrequenzen der jeweiligen Walze mit geringem Aufwand derart verändert werden, daß sich die Eigenschwingungsfrequenzen der einander zugeordneten Walzen stark unterscheiden. Hierdurch wird vermieden, daß sich die einander zugeordneten Walzen, die wie erwähnt in Berührung miteinander stehen, gegenseitig zur Schwingung in einer ihrer Eigenfrequenzen anregen.

Die Erfindung beruht auf der Erkenntnis, daß einander zugeordnete Arbeits- und Stützwalzen dann besonders schwingungsgefährdet sind, wenn die beiden einander zugeordneten Walzen Eigenschwingungsfrequenzen aufweisen, deren Werte besonders nahe beieinanderliegen. Hierbei ist zu berücksichtigen, daß für die beteiligten Walzen jeweils mehrere Eigenformen mit zugeordneten Eigenfrequenzen vorliegen. Aufgrund des deutlich höheren Durchmessers der Stützwalze gegenüber der Arbeitswalze ergibt sich bei den gängigen Walzendurchmessern häufig die Konstellation, daß die Eigenfrequenz der ersten Eigenform der Stützwalze in der Nähe der Eigenfrequenz der zweiten Eigenform der Arbeitswalze liegt. Dies führt in besonderem Maße zu einer Schwingungsgefährdung. Wenn nämlich die eine Walze zur Schwingung angeregt wird, regt diese Schwingung die andere Walze ebenfalls in einer ihrer Eigenfrequenzen an, so daß sich diese Schwingungen gegenseitig in starkem Ausmaß aufschaukeln und zu den unerwünschten Effekten, nämlich der Geräuschentwicklung, der Querwelligkeit und den Dickenveränderungen des Walzgutes führen.

Erfindungsgemäß wird deshalb durch die Ausbildung des beschriebenen achsparallelen Hohlraums in zumindest einer der beiden Walzen die Masse zumindest einer Walze verändert. Dadurch werden die Eigenschwingungsfrequenzen der entsprechenden Walze derart verändert, daß zu den Eigenschwingungsfrequenzen der zugeordneten Walzen ein hinreichender Unterschied vorliegt, und eine gegenseitige Schwingungsanregung verhindert wird. Es werden vielmehr eventuell angeregte Eigenfrequenzschwingungen einer der Walzen durch die zu ihr in fester Anlage arbeitende zweite Walze - mit nunmehr wesentlich anderer Schwingungscharakteristik - wirksam gedämpft. Dadurch, daß erfindungsgemäß auch die Walzen von bestehenden Walzanlagen mit geringem Aufwand und ohne der Notwendigkeit einer völligen Umkonstruktion mit dem Hohlraum zur Veränderung der Masse und damit der Eigenfrequenzen versehen werden können, bietet das erfindungsgemäße Verfahren insbesondere für bestehende Walzanlagen die Möglichkeit, mit geringem Aufwand das unerwünschte Auftreten von Schwingungen und das gegenseitige Aufschaukeln der Schwingungen der beiden zugeordneten Walzen zu verhindern.

### Weiterer Stand der Technik

Aus entfernten technischen Gebieten sind schwingungsgedämpfte Walzen bekannt. In der DE-A-23 52 088 ist eine Transportwalze für Glasscheiben offenbart, die mit einem dämpfenden Material gefüllt ist. Der gezeigten Walze, die gewissermaßen als Arbeitswalze wirkt, ist jedoch keine Stützwalze zugeordnet, so daß die aus dieser Druckschrift bekannte Anordnung deutliche Unterschiede zu der vorangehend beschriebenen Walzenanordnung bei Kaltwalzanlagen von Metallband oder -blech aufweist. Insbesondere können durch die Füllung mit dämpfendem Material nicht diejenigen speziellen Probleme gelöst werden, die bei Walzwerken beispielsweise durch die gegenseitige Schwingungsanregung der einander zugeordneten Walzen auftreten.

Dies gilt in gleicher Weise für die in der DE-OS 24 49 873 und der DE-OS 24 49 874 gezeigten Rollen, die in Drahtrichtmaschinen bzw. zum Kaltverformen von Walzdraht verwendet werden. Auch hierbei dient die Ausbildung von schwingungsdämpfendem Material an den Rollen lediglich der Dämpfung der jeweils einen, für sich alleine arbeitenden Rolle, und das schwingungsdämpfende Material kann die beschriebenen Schwingungsprobleme bei einander zugeordneten Walzen in Kaltwalzwerken nicht beheben.

### Bevorzugte Ausführungsformen der Erfindung

Bevorzugte Ausführungsformen des erfindungsgemäßen Verfahrens sind in den weiteren Ansprüchen beschrieben.

So hat es sich als vorteilhaft und als vergleichsweise einfache Maßnahme erwiesen, einen einzigen achsparallelen Hohlraum im Bereich der Drehachse der Walze auszubilden. Hierdurch werden die Rotationseigenschaften der Walze am wenigsten gefährdet. Insbesondere wird für den achsparallelen Hohlraum bevorzugt, daß dieser in wenig aufwendiger Art und Weise als axiale Bohrung ausgebildet wird. Gleichwohl kann der achsparallele Hohlraum auch andersartig gestaltet sein, und es können mehrere Hohlräume an exzentrischen Stellen regelmäßig in Umfangsrichtung verteilt ausgebildet werden.

Je nach dem speziellen Anwendungsfall kann der achsparallele Hohlraum in vorteilhafter Weise als Durchgangsbohrung oder als Sackloch ausgebildet sein, wobei das Sackloch vor dem antriebsseitigen Lagerzapfen endet, um Querschnittsschwächungen in diesem Bereich zu vermeiden.

Für die Dimensionierung des achsparallelen Hohlraums hat es sich als vorteilhaft erwiesen, diesen mit einem Durchmesser von 10% bis 50% des Durchmessers der Walze auszubilden.

Für die Veränderung der Masse der mit einem Hohlraum versehenen Walze und für die dadurch bewirkte Veränderung der Werte der Eigenschwingungsfrequenzen bietet es besondere Vorteile, wenn der Hohlraum mit einem Stoff eines anderen spezifischen Gewichts als des Werkstoffs der Walze gefüllt wird. Es wird durch diese bevorzugte Ausführungsform der Erfindung in vorteilhafter Weise eine Veränderung der Masse und damit der Eigenfrequenz zumindest einer Walze bewirkt, so daß eine gegenseitige Schwingungsanregung einander zugeordneter Walzen gezielt vermieden wird.

Für diese Füllung konnten beispielsweise für Blei, Wolfram, Wolframlegierungen, Kunststoff und Leichtmetall gute Eigenschaften festgestellt werden. Aufgrund der höheren Dichte von Blei (11,3 g/cm³ gegenüber 7,9 g/cm³ des Stahls des Walzenkörpers) eignet sich dieser Werkstoff sehr gut für die Erhöhung der Masse einer der beiden beteiligten Walzen. Darüber hinaus ist die Verwendung von Blei für die Füllung der achsparallelen Hohlräume deshalb von Vorteil, weil Blei einen um den Faktor 10 niedrigeren Elastizitätsmodul als Stahl aufweist, was zu einer hervorragenden Schwingungsdämpfung führt. Ferner haben sich auch Kunststoffe und Leichtmetalle, die ein deutlich geringeres spezifisches Gewicht als Stahl aufweisen, als besonders dämpfungswirksam erwiesen.

Für die Füllung des achsparallelen Hohlraums kann das verwendete Material beispielsweise in flüssigem Zustand eingegossen und nachfolgend zu seiner Befestigung in der Axialbohrung verstemmt werden.

Ferner kann gemäß der Erfindung die Füllung in Form zumindest einer Scheibe, die ebenfalls verstemmt wird, oder eines rohrförmigen Körpers ausgebildet werden, dessen Durchmesser in etwa dem Innendurchmesser der Axialbohrung entspricht. Hierbei wird im Inneren des rohrförmigen Körpers ein Zuganker mit gegebenenfalls konischen Spannstücken angeordnet, die zur sicheren Verspannung des rohrförmigen Körpers in der Bohrung der Walze über den mit einem Gewinde versehenen Zuganker betätigt werden.

Die in den zumindest einen Hohlraum eingebrachten Füllkörper können auch durch endseitig vorgesehene Stahlscheiben und Tellerfedern und entsprechend angepaßte Schraubverschlüsse in ihrer Lage fixiert werden.

Schließlich bietet es für bestimmte Fälle Vorteile, wenn die Füllung des achsparallelen Hohlraums in Form von Schrot oder ähnlichem Schüttgut in den Hohlraum eingebracht wird. Hierbei wird der Hohlraum der Walze beidseitig verschlossen. Diese Ausführungsform kann in vorteilhafter Weise mit dem Eingießen von Kunststoff kombiniert werden. Hierbei wird der Hohlraum zwischen den eingefüllten Schrotkugeln beispielsweise mit Kunstharz ausgefüllt, wodurch zugleich eine Verankerung des eingefügten Schrots oder Schüttgutes erreicht wird.

Bei dem erfindungsgemäßen Walzensatz, der aus zumindest je einer Arbeits- und Stützwalze besteht, ist zumindest eine Walze mit zumindest einem achsparallelen Hohlraum versehen, der vorzugsweise zumindest teilweise mit einem Material anderer Dichte und/oder anderer Beschaffenheit als der Werkstoff der Walze gefüllt ist. Wie vorangehend beschrieben, kann durch diese Maßnahme sichergestellt werden, daß zwischen den Werten der Eigenschwingungsfrequenz der beiden Walzen zur Verhinderung von gegenseitiger Schwingungsanregung ein hinreichender Unterschied vorliegt.

Für den Unterschied zwischen den Werten der Eigenschwingungsfrequenzen der beiden Walzen hat es sich als vorteilhaft erwiesen, wenn sich diejenigen Eigenfrequenzen der beiden Walzen, die am nächsten beieinanderliegen, um mindestens 10% unterscheiden.

Ferner werden für den erfindungsgemäßen Walzensatz diejenigen Ausführungsformen bevorzugt, die sich aus den vorangehend beschriebenen bevorzugten Ausführungsformen des erfindungsgemäßen Verfahrens ergeben.

### Kurze Beschreibung der Zeichnungen

Nachfolgend wird die Erfindung anhand von beispielhaft in den Zeichnungen dargestellten Ausführungsformen näher erläutert. Es zeigen:
- Fig. 1: eine erfindungsgemäß bearbeitete Arbeitswalze in einer ersten Ausführungsform; und
- Fig. 2: eine erfindungsgemäß bearbeitete Arbeitswalze in einer zweiten Ausführungsform.

### Beschreibung bevorzugter Ausführungsbeispiele der Erfindung

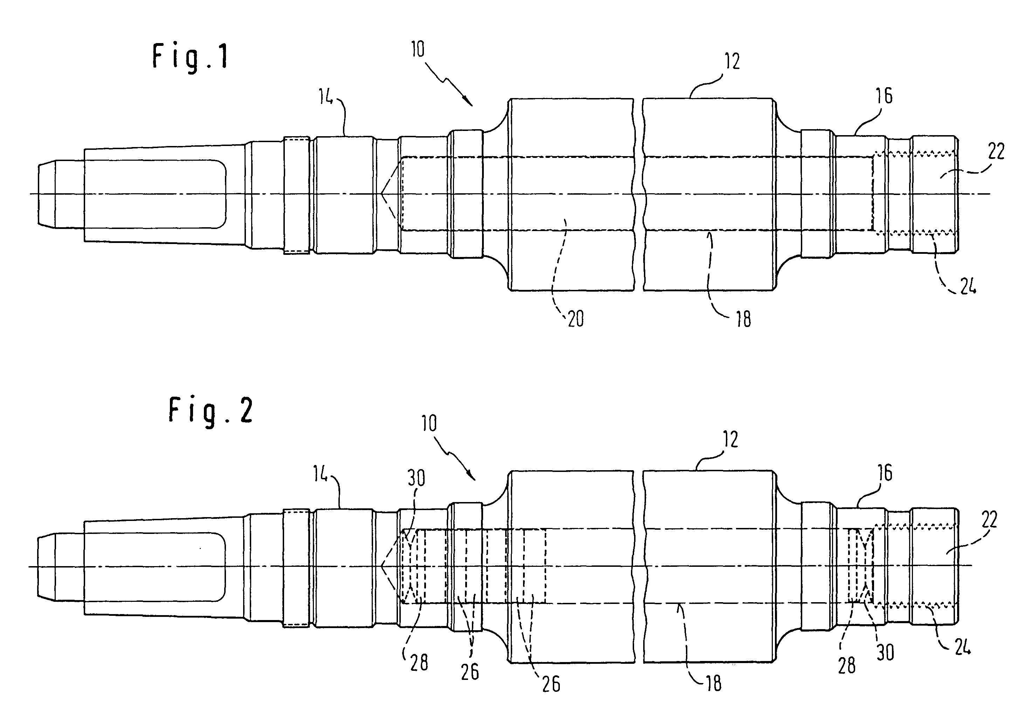

Die in Fig. 1 dargestellte Arbeitswalze 10 weist zum einen einen in Form eines Zylinders 12 gestalteten Bereich auf, der zum Walzen von Metallband oder -blech mit einem ähnlich gestalteten Bereich einer weiteren Arbeitswalze zusammenwirkt. Hierbei tritt das Band oder Blech zwischen den zylindrischen Oberflächen der jeweiligen Bereiche 12 hindurch. In den Figuren ist dieser Bereich 12 aus Gründen der Übersichtlichkeit gegenüber den seitlich von dem Bereich 12 angeordneten Lagerzapfen 14, 16 stark verkürzt dargestellt. Bei einer gängigen Ausführungsform einer derartigen Arbeitswalze ist die Länge des Bereichs 12 (gemäß der Darstellung in den Figuren die Abmessung von links nach rechts) mehr als doppelt so groß wie die Länge des linken Lagerzapfens 14. Im Bereich der Lagerzapfen 14, 16 ist die dargestellte Arbeitswalze 10 mit verschiedenen Verjüngungen versehen, die beispielsweise der Anbringung der Lager und der Anbringung von geeigneten Elementen für die Übertragung der Antriebskräfte zum Drehen der Arbeitswalze 10 um ihre Längsachse dienen.

Erfindungsgemäß ist in der Arbeitswalze 10 in Axialrichtung ein Sackloch 18 ausgebildet. Bei der dargestellten Ausführungsform endet dieses Sackloch 18 im Bereich des Lagerzapfens 14, um die Arbeitswalze 10 in diesem Bereich hinsichtlich ihres Querschnitts nicht übermäßig zu schwächen. Gemäß einer bevorzugten Ausführungsform der erfindungsgemäßen Walze 10 ist das Sackloch 18 im Bereich der Drehachse der Arbeitswalze 10 ausgebildet und ferner mit einem Bleikörper 20 gefüllt.

Der Bleikörper 20 ist im wesentlichen in Form eines in das Sackloch 18 eingepaßten Zylinders gestaltet. Zur Fixierung des Bleikörpers 20 ist im Bereich der Öffnung des Sackloches 18 ein sogenannter Verschlußstopfen 22 vorgesehen. Dieser Verschlußstopfen 22 wird in diesen Bereich über ein Gewinde 24 eingeschraubt, drückt im eingeschraubten Zustand auf den Bleikörper 20 und fixiert diesen somit in seiner Lage. Für die Füllung kann es ferner vorteilhaft sein, wenn diese mittels Einschrumpfen oder zusätzliches Verstemmen über ihren Umfang klemmend in der Bohrung 18 gehalten wird.

Ausgehend von einer vorhandenen Arbeitswalze einer bestehenden Walzanlage wird die gezeigte Arbeitswalze 10 dadurch erhalten, daß die Bohrung 18 ausgebildet, und nachfolgend die Bleifüllung 20 in diese Bohrung eingebracht und darin fixiert wird. Da sich aufgrund des höheren spezifischen Gewichts von Blei gegenüber dem Walzenwerkstoff, üblicherweise Stahl, die Masse der gesamten Walze 10 durch die beschriebene Maßnahme erheblich erhöht, verändern sich auch die Eigenfrequenzen der Walze 10. Durch die beschriebene, vergleichsweise einfache Modifikation an der Arbeitswalze 10 können für die Eigenfrequenzen der Walze Werte erreicht werden, die sich von den Eigenfrequenzen einer zugeordneten Stützwalze derart hinreichend unterscheiden, daß eine gegenseitige Schwingungsanregung in einer jeweiligen Eigenfrequenz vermieden werden kann.

In Fig. 2 ist eine weitere Ausführungsform einer erfindungsgemäß bearbeiteten Arbeitswalze 10 dargestellt, die sich von der in Fig. 1 dargestellten Ausführungsform hinsichtlich der Füllung des Hohlraumes 18 unterscheidet. Bei dieser Ausführungsform sind in dem Hohlraum 18 mehrere scheibenförmige Füllkörper 26 aus Blei angebracht. Obwohl in Fig. 2 derartige Füllkörper 26 nur für den linken Bereich des Hohlraumes 18 gezeigt sind, ist dieser bis zu dem Bereich der Fixierung der Füllkörper 26, die in Fig. 2 rechts gezeigt ist, mit Füllkörpern 26 befüllt. Die Fixierung erfolgt, wie in Fig. 2 gezeigt, sowohl am linken Ende der Bohrung 18, als auch im Bereich des Verschlusses am rechten Ende der Bohrung 18 durch jeweils eine Stahlscheibe 28, die an die Füllkörper aus Blei anliegend angeordnet ist. Sowohl im Grund der Bohrung 18, also an deren linkem Ende, als auch rechts- von der zur rechten Seite der Füllkörper 26 angeordneten Stahlscheibe 28 ist eine Tellerfeder 30 angeordnet. Hierbei kann es sich beispielsweise um eine Tellerfeder nach DIN 2093-A140GR3 handeln.

Nach der Befüllung des Hohlraumes 18 mit - in dieser Reihenfolge - einer Tellerfeder 30, einer Stahlscheibe 28, mehreren Füllkörpern 26, einer weiteren Stahlscheibe 28 und einer weiteren Tellerfeder 30 erfolgt der Verschluß des Hohlraumes 18 durch den in das Gewinde 24 eingedrehten Verschlußstopfen 22, der auch bei der in Fig. 1 gezeigten Ausführungsform für den Verschluß des Hohlraumes 18 und die Fixierung der Füllung sorgt. Auch bei der in Fig. 2 dargestellten Ausführungsform sind die Eigenfrequenzen der Walze derart verändert, daß sie sich von den Eigenfrequenzen der Stützwalze zur Vermeidung von gegenseitiger Schwingungsanregung hinreichend unterscheiden.

## Patentansprüche

1. Verfahren zur Herstellung von schwingungsgedämpften Walzen, vorzugsweise von bestehenden Walzanlagen mit zumindest je einer Arbeits- und Stützwalze,
**gekennzeichnet durch**
das Ausbilden zumindest eines achsparallelen Hohlraums in zumindest einer Stützwalze und/oder einer zugeordneten Arbeitswalze zur Veränderung der Werte der Eigenschwingungsfrequenzen zumindest einer Walze derart, daß sich die Eigenschwingungsfrequenzen der einander zugeordneten Stütz- und Arbeitswalzen zur Vermeidung von gegenseitiger Schwingungsanregung hinreichend unterscheiden.

2. Verfahren nach Anspruch 1,
**dadurch gekennzeichnet, daß**
der achsparallele Hohlraum im Bereich der Drehachse der Walze und vorzugsweise als axiale Bohrung ausgebildet wird.

3. Verfahren nach Anspruch 1 oder 2,
**dadurch gekennzeichnet, daß**
der achsparallele Hohlraum als Durchgangsbohrung oder als Sackloch ausgebildet wird.

4. Verfahren nach zumindest einem der vorangehenden Ansprüche,
**dadurch gekennzeichnet, daß**
der achsparallele Hohlraum mit einem Durchmesser von 10% bis 50% des Durchmessers der Walze ausgebildet wird.

5. Verfahren nach zumindest einem der vorangehenden Ansprüche,
**dadurch gekennzeichnet, daß**
der achsparallele Hohlraum ferner mit einem Stoff eines anderen spezifischen Gewichts als des Werkstoffs der Walze gefüllt wird.

6. Verfahren nach Anspruch 5,
**dadurch gekennzeichnet, daß**
der achsparallele Hohlraum mit Blei, Wolfram, einer Wolframlegierung, Kunststoff oder Leichtmetall gefüllt wird.

7. Verfahren nach Anspruch 5 oder 6,
**dadurch gekennzeichnet, daß**
die Füllung eingegossen und anschließend verstemmt wird.

8. Verfahren nach zumindest einem der Ansprüche 1 bis 6,
**dadurch gekennzeichnet, daß**
die Füllung in Form zumindest einer Scheibe oder eines rohrförmigen Körpers eingebracht und anschließend verstemmt wird.

9. Verfahren nach zumindest einem der vorangehenden Ansprüche,
**dadurch gekennzeichnet, daß**
die Füllung durch ein Spannstück und/oder einen Verschlußstopfen fixiert wird.

10. Verfahren nach zumindest einem der vorangehenden Ansprüche,
**dadurch gekennzeichnet, daß**
die Füllung unter Verwendung zumindest einer Tellerfeder fixiert wird.

11. Verfahren nach zumindest einem der Ansprüche 1 bis 7,
**dadurch gekennzeichnet, daß**
die Füllung in Form von Schrot in den Hohlraum eingebracht wird.

12. Walzensatz bestehend aus zumindest je einer Arbeits- und Stützwalze zum Walzen von Metallband oder -blech,
**dadurch gekennzeichnet, daß**
zumindest eine Walze (10) mit zumindest einem achsparallelen Hohlraum (18) versehen ist, der vorzugsweise zumindest teilweise mit einem Material anderer Dichte und/oder anderer Beschaffenheit als der Werkstoff der Walze (10) gefüllt ist, so daß zwischen den Werten der Eigenschwingungsfrequenzen der beiden Walzen zur Verhinderung von gegenseitiger Schwingungsanregung ein hinreichender Unterschied vorliegt.

13. Walzensatz nach Anspruch 12,
**dadurch gekennzeichnet, daß**
sich die Werte der Eigenschwingungsfrequenzen der beiden Walzen um mindestens 10% unterscheiden.

14. Walzensatz nach Anspruch 12 oder 13,
**dadurch gekennzeichnet, daß**
der achsparallele Hohlraum (18) im Bereich der Drehachse der Walze (10) und vorzugsweise als axiale Bohrung ausgebildet ist.

15. Walzensatz nach zumindest einem der Ansprüche 12 bis 14,
**dadurch gekennzeichnet, daß**
der achsparallele Hohlraum (18) als Durchgangsbohrung oder Sackloch ausgebildet ist.

16. Walzensatz nach zumindest einem der Ansprüche 12 bis 15,
**dadurch gekennzeichnet, daß**
der Durchmesser des achsparallelen Hohlraums (18) 10% bis 50% des Durchmessers der Walze (10) beträgt.

17. Walzensatz nach zumindest einem der Ansprüche 12 bis 16,
**dadurch gekennzeichnet, daß**
der achsparallele Hohlraum (18) mit einem Stoff höherem spezifischen Gewichts als des Werkstoffs der Walze (10) gefüllt ist.

18. Walzensatz nach Anspruch 17,
**dadurch gekennzeichnet, daß**
der Hohlraum (18) mit Blei, Wolfram oder einer Wolframlegierung gefüllt ist.

19. Walzensatz nach Anspruch 17 oder 18,
**dadurch gekennzeichnet, daß**
die Füllung des Hohlraums (18) in Form zumindest einer Scheibe (26), eines rohrförmigen Körpers (20) oder in Form von Schrot ausgebildet ist.

20. Walzensatz nach einem der Ansprüche 17 bis 19,
**dadurch gekennzeichnet, daß**
die Füllung durch ein Spannstück und/oder einen Verschlußstopfen (22) fixiert ist.

21. Walzensatz nach einem der Ansprüche 17 bis 20,
**dadurch gekennzeichnet, daß**
die Füllung unter Verwendung zumindest einer Tellerfeder (30) fixiert ist.

22. Walzanlage mit zumindest einem Walzensatz nach zumindest einem der vorangehenden Ansprüche.

## Claims

1. Method of manufacturing vibration-damped rolls, preferably of existing rolling installations comprising in each case at least one working and one supporting roll,
**characterized by**
the forming of at least one paraxial cavity in at least one supporting roll and/or associated working roll in order to vary the values of the natural vibration frequencies of at least one roll in such a way that the natural vibration frequencies of the mutually associated supporting and working rolls differ sufficiently to prevent a mutual excitation of vibrations.

2. Method according to claim 1,
**characterized in that**
the paraxial cavity is formed in the region of the axis of rotation of the roll and preferably takes the form of an axial bore.

3. Method according to claim 1 or 2,
**characterized in that**
the paraxial cavity takes the form of a through-bore or a blind hole.

4. Method according to at least one of the preceding claims,
**characterized in that**
the paraxial cavity is constructed with a diameter, which is 10% to 50% of the diameter of the roll.

5. Method according to at least one of the preceding claims,
**characterized in that**
the paraxial cavity is moreover filled with a substance of a different specific gravity to the material of the roll.

6. Method according to claim 5,
**characterized in that**
the paraxial cavity is filled with lead, tungsten, a tungsten alloy, plastics material or light metal.

7. Method according to claim 5 or 6,
**characterized in that**
the filling is poured in and subsequently caulked.

8. Method according to at least one of claims 1 to 6,
**characterized in that**
the filling is introduced in the form of at least one disk or a tubular body and is subsequently caulked.

9. Method according to at least one of the preceding claims,
**characterized in that**
the filling is fixed by means of a clamping piece and/or a sealing plug.

10. Method according to at least one of the preceding claims,
**characterized in that**
the filling is fixed using at least one cup spring.

11. Method according to at least one of claims 1 to 7,
**characterized in that**
the filling is introduced in the form of shot into the cavity.

12. Set of rolls comprising in each case at least one working and one supporting roll for rolling strip or sheet metal,
**characterized in that**
at least one roll (10) is provided with at least one paraxial cavity (18), which is preferably filled at least partially with a material of a different density and/or different quality to the material of the roll (10), so that there is a sufficient difference between the values of the natural vibration frequencies of the two rolls to prevent a mutual excitation of vibrations.

13. Set of rolls according to claim 12,
**characterized in that**
the values of the natural vibration frequencies of the two rolls differ by at least 10%.

14. Set of rolls according to claim 12 or 13,
**characterized in that**
the paraxial cavity (18) is formed in the region of the axis of rotation and preferably takes the form of an axial bore.

15. Set of rolls according to at least one of claims 12 to 14,
**characterized in that**
the paraxial cavity (18) takes the form of a through-bore or a blind hole.

16. Set of rolls according to at least one of claims 12 to 15,
**characterized in that**
the diameter of the paraxial cavity (18) is 10% to 50% of the diameter of the roll (10).

17. Set of rolls according to at least one of claims 12 to 16,
**characterized in that**
the paraxial cavity (18) is filled with a substance of a higher specific gravity than the material of the roll (10).

18. Set of rolls according to claim 17,
**characterized in that**
the cavity (18) is filled with lead, tungsten or a tungsten alloy.

19. Set of rolls according to claim 17 or 18,
**characterized in that**
the filling of the cavity (18) takes the form of at least one disk (26), a tubular body (20) or shot.

20. Set of rolls according to one of claims 17 to 19,
**characterized in that**
the filling is fixed by means of a clamping piece and/or a sealing plug (22).

21. Set of rolls according to one of claims 17 to 20,
**characterized in that**
the filling is fixed using at least one cup spring (30).

22. Rolling installation having at least one set of rolls according to at least one of the preceding claims.

## Revendications

1. Procédé pour fabriquer des cylindres dont les vibrations sont amorties, de préférence d'installations existantes de laminage, comportant au moins respectivement un cylindre de travail et un cylindre d'appui, **caractérisé par** la création d'au moins une cavité parallèle à l'axe dans au moins un cylindre d'appui et/ou un cylindre de travail associé pour modifier la valeur des fréquences de vibration propres d'au moins un cylindre de telle sorte que les fréquences de vibration propres du cylindre d'appui et du cylindre de travail, qui sont associés l'un à l'autre, diffèrent suffisamment pour éviter des déclenchements de vibrations réciproques.

2. Procédé selon la revendication 1, **caractérisé en ce que** la cavité parallèle à l'axe est formé dans la zone de l'axe de rotation du cylindre et de préférence sous la forme d'un perçage axial.

3. Procédé selon la revendication 1 ou 2, **caractérisé en ce que** la cavité parallèle à l'axe est agencée sous la forme d'un perçage traversant ou d'un trou borgne.

4. Procédé selon l'une ou moins des revendications précédentes, **caractérisé en ce que** la cavité parallèle à l'axe est réalisé avec un diamètre compris entre 10 % et 50 % du diamètre du cylindre.

5. Procédé selon l'une ou moins des revendications précédentes, **caractérisé en ce que** la cavité parallèle à l'axe est en outre remplie par un matériau ayant un poids spécifique autre que celui du matériau du cylindre.

6. Procédé selon la revendication 5, **caractérisé en ce que** la cavité parallèle à l'axe est remplie par du plomb, du tungstène, un alliage de tungstène, une matière plastique ou un métal léger.

7. Procédé selon la revendication 5 ou 6, **caractérisé en ce qu'**on coule la charge de remplissage et qu'ensuite on effectue une obturation.

8. Procédé selon au moins l'une des revendications 1 à 6, **caractérisé en ce qu'**on introduit la charge de remplissage sous la forme d'au moins un corps de forme tubulaire et qu'ensuite on effectue une obturation.

9. Procédé selon l'une ou moins des revendications précédentes, **caractérisé en ce qu'**on fixe la charge de remplissage au moyen d'un élément de serrage et/ou au moyen d'un bouchon d'obturation.

10. Procédé selon l'une ou moins des revendications précédentes, **caractérisé en ce qu'**on fixe la charge de remplissage en utilisant au moins un ressort Belleville.

11. Procédé selon l'une ou moins des revendications 1 à 7, **caractérisé en ce qu'**on introduit la charge de remplissage sous la forme de ferrailles dans la cavité.

12. Ensemble de cylindres constitué par au moins respectivement un cylindre de travail et un cylindre d'appui pour le laminage d'un feuillard ou d'une tôle métallique, **caractérisé en ce qu'**au moins un cylindre (10) est pourvu d'au moins une cavité (18) parallèle à l'axe et qui est remplie de préférence au moins en partie par un matériau ayant une autre densité et/ou d'une autre nature que le matériau du cylindre (10), de sorte qu'une différence suffisante est présente entre les valeurs des fréquences de vibration propres des deux cylindres de manière à empêcher une mise en vibration réciproque.

13. Ensemble de cylindres selon la revendication 12, **caractérisé en ce que** les valeurs des fréquences de vibration propres des deux cylindres diffèrent d'au moins 10 %.

14. Ensemble de cylindres selon la revendication 12 ou 13, **caractérisé en ce que** la cavité (18) parallèle à l'axe est formée dans la zone de l'axe de rotation du cylindre (10), et ce de préférence sous la forme d'un perçage axial.

15. Ensemble de cylindres selon au moins l'une des revendications 12 à 14, **caractérisé en ce que** la cavité (18) parallèle à l'axe est agencée sous la forme d'un perçage traversant ou d'un trou borgne.

16. Ensemble de cylindres selon au moins l'une des revendications 12 à 15, **caractérisé en ce que** la cavité parallèle à l'axe est réalisée avec un diamètre compris entre 10 % et 50 % du diamètre du cylindre.

17. Ensemble de cylindres selon au moins l'une des revendications 12 à 16, **caractérisé en ce que** la cavité parallèle à l'axe est en outre remplie par un matériau ayant un poids spécifique autre que celui du matériau du cylindre.

18. Ensemble de cylindres selon la revendication 17, **caractérisé en ce que** la cavité parallèle à l'axe est remplie par du plomb, du tungstène ou un alliage de tungstène.

19. Ensemble de cylindres selon la revendication 17 ou 18, **caractérisé en ce que** la charge de remplissage de la cavité (18) est constitué sous la forme d'au moins un disque (26), d'un corps de forme tubulaire (20) ou sous la forme de ferrailles.

20. Ensemble de cylindres selon au moins l'une des revendications 17 à 19, **caractérisé en ce que** la charge de remplissage est fixée au moyen d'un élément de serrage et/ou au moyen d'un bouchon d'obturation (22).

21. Ensemble de cylindres selon au moins l'une des revendications 17 à 20, **caractérisé en ce que** la charge de remplissage est fixée moyennant l'utilisation d'au moins un ressort Belleville (30).

22. Installation de laminage comportant au moins un ensemble de cylindres selon au moins l'une des revendications précédentes.
